# NEUE EUROPÄISCHE PATENTSCHRIFT

(11) **EP 2 378 309 B2**
(45) Veröffentlichungstag und Bekanntmachung des Hinweises auf die Entscheidung über den Einspruch: **09.08.2023**
(45) Hinweis auf die Patenterteilung: 04.07.2012
(21) Anmeldenummer: 10159752.4
(22) Anmeldetag: 13.04.2010
(51) Int. Cl.: G01S 7/481, G02B 5/10

(54) **Optoelektronischer Sensor und Verfahren zur Erzeugung von Informationen über Objekte in einem Überwachungsbereich**
Optoelectronic sensor and method for recording information about objects in a monitoring area
Capteur optoélectronique et procédé de production d'informations sur des objets dans une zone de surveillance

(43) Veröffentlichungstag der Anmeldung: 19.10.2011
(73) Patentinhaber: SICK AG, 79183 Waldkirch (DE)
(72) Erfinder: Wüstefeld, Martin, 79350 Sexau (DE); Mack, Stefan, 79104 Freiburg (DE); Krämer, Joachim, 79110 Freiburg (DE)

(56) Entgegenhaltungen:
- EP-A1- 2 101 189
- EP-A2- 0 897 120

## Beschreibung

Die Erfindung betrifft einen optoelektronischen Sensor, insbesondere einen Laserscanner, sowie ein Verfahren zur Erzeugung von Informationen über Objekte in einem Überwachungsbereich nach Anspruch 1 beziehungsweise 15.

Laserscanner werden in vielen Anwendungen zur Objekterfassung eingesetzt. Ein von einem Laser erzeugter Lichtstrahl überstreicht mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird.

Mit den Winkel- und Entfernungsangaben ist der Ort eines Objektes in dem Überwachungsbereich in zweidimensionalen Polarkoordinaten erfasst. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

In den meisten herkömmlichen Laserscannern dient als Ablenkeinheit ein flacher Drehspiegel, mit dessen Hilfe die Scanebene in diskreten Winkelschritten abgetastet wird. Dabei sind je nach Anordnung der Elemente des Laserscanners Sichtwinkel von bis zu 360° möglich. Das optische System besteht aus einer Autokollimationsanordnung der Sendeeinheit und der Empfangsoptik mit zugehörigem Empfangselement. Die Empfangsoptik umfasst üblicherweise eine einfache Sammellinse.

Ein Nachteil der Anordnung mit einer solchen Sammellinse ist der Effekt der sogenannten Kernabschattung. Damit ist gemeint, dass eine Umlenkeinheit für die Einkopplung des Sendestrahls den zentralen Anteil des Empfangslichts abschattet, so dass dieser Anteil nicht auf dem Empfangselement registriert werden kann.

Aus der EP 0 897 120 B1 ist eine Vorrichtung zum Orten von in einen zu überwachenden Raumbereich eindringenden Objekten bekannt, bei welcher der Empfangskollimator drei konzentrische Fokussierungszonen aufweist. Damit soll der Effekt der Kernabschattung abgemildert werden.

Ein anderer Nachteil bei der Verwendung einer Linsenanordnung für die Strahlformung in dem Empfangspfad ist der benötigte Bauraum für den Lichtweg zwischen Empfangsoptik und Empfangselement. Die DE 10 2006 040 812 A1 verwendet anstelle eines flachen Drehspiegels und einer Empfangslinse einen außeraxialen Parabolspiegel. Ein ähnliches Konzept ist auch in der US2009/0122294 A1 oder der JP3175390A beschrieben. Die herkömmlichen Parabolspiegel sind aber wegen der hohen numerischen Apertur hochempfindlich gegenüber Verkippungen und müssen deshalb in der Fertigung sehr aufwändig und genau justiert werden. Außerdem wirkt sich bei einem solchen Parabolspiegel das Problem der Kernabschattung besonders dann sehr stark aus, wenn der Laserscanner weiter miniaturisiert werden soll.

In der EP 2 101 189 A1 wird ein optischer Sensor beschrieben, dessen Empfangsoptik einen Hohlspiegel aufweist, in dessen Fokalbereich eine Empfangseinheit positioniert ist. Mindestens ein gesondertes Reflektorelement, das als ringförmiges Element und mit dem Hohlspiegel einstückig ausgebildet sein kann, leitet Licht von Objekten im Nahbereich auf den Detektor.

Es ist daher Aufgabe der Erfindung, ein robustes optisches Konzept für einen großen Messbereich anzugeben, welches den Aufbau eines kompakten Sensors erlaubt.

Diese Aufgabe wird durch einen optoelektronischen Sensor gemäß Anspruch 1 und ein Verfahren zur Erzeugung von Informationen über Objekte in einem Überwachungsbereich gemäß Anspruch 15 gelöst. Dabei geht die Erfindung von dem Grundgedanken aus, die optischen Eigenschaften der Sendeoptik in die Ablenkeinheit zu integrieren. Dazu wird die Ablenkeinheit konkav ausgebildet, um das empfangene Licht gleichzeitig mit der Umlenkung auf den Lichtempfänger zu fokussieren. Damit nicht die Abschattung oder sonstige Verluste durch die Einkopplung des ausgesandten Lichtstrahls die Detektion von Objekten in bestimmten Entfernungen verhindert, insbesondere durch Kernabschattung im Nahbereich, sind auf der Ablenkeinheit Zonen mit unterschiedlichen Abbildungseigenschaften vorgesehen. Mit mehr als einer weiteren Zonen lassen sich feinere Abstufungen erzielen, wobei dann die weiteren Zonen jeweils eine unterschiedliche Brennweite aufweisen als die Hauptzone und bevorzugt zugleich auch eine untereinander unterschiedliche Brennweite.

Die Erfindung hat den Vorteil, dass mit der erfindungsgemäßen Ablenkeinheit sehr hohe numerische Aperturen erzeugbar sind und so die Umlenkung mit der empfangsseitigen Abbildung kombinierbar wird. Dadurch wird eine eigene Empfangsoptik verzichtbar und damit auch der Raum für den Lichtweg zwischen Empfangsoptik und Lichtempfänger eingespart. Dies ermöglicht eine besonders geringe Baugröße des Sensors. Zugleich ist der Sensor kostengünstig, denn die drei Elemente Spiegelträger, Spiegel und Empfangsoptik beziehungsweise allgemein Träger der Ablenkeinheit, Ablenkeinheit und empfangsseitige Abbildung werden in einem Bauteil integriert. Der Empfangssignalverlauf ist unempfindlich gegenüber fertigungsbedingten Abweichungen von Sende- und Empfangsachse. Wegen der hohen Robustheit gegenüber Verkippungen der gesamten Ablenkeinheit wird die Fertigung und Montage erleichtert.

Die Ablenkeinheit ist beweglich, insbesondere ein Drehspiegel. Dabei entsteht ein Laserscanner, bei dem die Ablenkeinheit den ausgesandten Lichtstrahl periodisch in eine Überwachungsebene ablenkt und somit diese Scanebene periodisch abtastet.

Die Ablenkeinheit ist bevorzugt mit der Hauptzone und den weiteren Zonen einstückig ausgebildet. Dies führt zu einer besonders kostengünstigen Ablenkeinheit, in der keine weiteren Anpassungen vorgenommen werden müssen. Eine einstückige Ablenkeinheit kann beispielsweise als Spritzgussteil hergestellt werden. Dabei wird bevorzugt eine spiegelnde Beschichtung aufgebracht.

Die Hauptzone ist bevorzugt als Fernzone und die weiteren Zonen sind bevorzugt als Nahzonen ausgebildet. Das Empfangssignal bleibt damit über einen besonders großen Bereich unterschiedlicher Objektabstände stabil. Die Kernabschattung kann durch die Nahzonen kompensiert werden. Die Hauptzone ist dabei optisch abbildend mit einer ersten Brennweite ausgebildet. Die Hauptzone soll möglichst viel Licht auf den Lichtempfänger lenken. Da dessen Ausdehnung üblicherweise sehr klein ist, gelingt dies am besten durch eine Abbildung des Empfangsflecks auf den Lichtempfänger. Die weiteren Zonen sind ebenfalls optisch abbildend ausgebildet, wobei sie eine zweite Brennweite ungleich der ersten Brennweite aufweisen. Auch untereinander können die Brennweiten der weiteren Zonen, sofern mehrere der weiteren Zonen vorhanden sind, noch variieren, also eine dritte und weitere Brennweiten vorgesehen sein. Alternativ sind die weiteren Zonen mit optisch nicht abbildenden, insbesondere Licht streuenden oder Licht umverteilenden Eigenschaften ausgebildet, beispielsweise um eine homogene Lichtverteilung auf dem Lichtempfänger zu erzeugen.

Besonders bevorzugt weist die Ablenkeinheit eine Fernzone und zwei Nahzonen auf. Damit stehen genügend unterschiedliche Zonen zur Verfügung, um Freiheiten für die gewünschten optischen Eigenschaften zur Verfügung zu stellen, während zugleich die Ablenkeinheit noch recht einfach bleibt und relativ große Zonen mit entsprechender Lichtausbeute bereitstellt.

Die weiteren Zonen sind bevorzugt als ringförmige Segmente in der Hauptzone ausgebildet. Damit wird eine Zuordnung zwischen den Zonen und einem bestimmten Objektabstandsbereich gewahrt. Jedes ringförmige Segment ist dabei vor allem für einen bestimmten Objektabstandsbereich zuständig und in seiner Formgebung dafür optimiert.

Die weiteren Zonen sind bevorzugt gegenüber der Hauptzone und untereinander um einen Verkippungswinkel verkippt. Damit werden die Justageanforderungen in Fertigung und Montage abgeschwächt. Bildlich gesprochen fängt bei leicht dejustierter Anordnung stets zumindest eine der verkippten Zonen noch genügend Empfangslicht auf. Der Verkippungswinkel beträgt besonders bevorzugt weniger als 1 ° sogar oder weniger als 0,5°. Damit wird ein Ausgleich zwischen präzisen optischen Eigenschaften und nicht zu hohen Ansprüchen an die Justierung gefunden.

Die Ablenkeinheit weist bevorzugt ein flaches Segment zur Ablenkung des ausgesandten Lichtstrahls auf. Die Ablenkeinheit ist damit nicht nur für das Empfangslicht, sondern auch für den ausgesandten Lichtstrahl zuständig. Bei einem Laserscanner wird damit dieselbe Drehbewegung für den Sendepfad und den Empfangspfad genutzt. Das flache Segment ist insbesondere im Zentrum der Hauptzone angeordnet, so dass der ausgesandte Lichtstrahl mittig und unabhängig von der Winkelstellung der Ablenkeinheit in den Überwachungsbereich umgelenkt wird.

Die Hauptzone und/oder die weiteren Zonen weisen im Wesentlichen die Form eines Paraboloids, eines Hyperboloids oder eines Ellipsoids auf. Diese Konturen sind für die empfangsseitige Abbildung besonders geeignet. Dabei muss die Form nur im Wesentlichen der genannten Kontur entsprechen, so dass beispielsweise bei einem Paraboloid kleine Korrekturterme höherer als zweiter Ordnung zugelassen sind oder umgekehrt die Entwicklung eines Hyperboloids oder eines Ellipsoids bei höheren Ordnungen ohne besonderen Einfluss auf die optischen Eigenschaften der Kontur abgebrochen wird. Noch bevorzugter ist eine außeraxiale Anordnung vorgesehen. Dies bedeutet, dass gezielt kein um den Scheitel oder den Durchstoßpunkt einer Hauptachse symmetrischer Anteil der Kontur gewählt wird.

Der Überwachungsbereich ist bevorzugt eine Scanebene, welche von dem Lichtstrahl mittels der Ablenkeinheit abtastbar ist. Dabei stehen noch bevorzugter die optische Achse des Lichtempfängers und die Scanebene senkrecht zueinander.

Die optische Achse des Lichtsenders steht bevorzugt in einem spitzen Winkel zu der optischen Achse des Lichtempfängers, wobei ein Umlenkspiegel oder ein Strahlteiler vorgesehen ist, welcher in dem halben spitzen Winkel orientiert ist und zwischen Lichtempfänger und Ablenkeinheit, insbesondere oberhalb des Zentrums der Hauptzone angeordnet ist. Durch diese Anordnung in einem spitzen Winkel wird weniger Bauraum benötigt als bei herkömmlicher Anordnung senkrecht zu der optischen Achse des Lichtempfängers. Außerdem schattet der Umlenkspiegel oder Strahlteiler in dieser Anordnung bei gleicher Fläche durch die günstige Projektion auf die Ablenkeinheit weniger Empfangslicht ab. Selbstverständlich muss wie bei allen Winkelangaben nicht exakt der halbe spitze Winkel eingehalten werden, indem Abweichungen durch entsprechende Anpassung der Anordnung der optischen Elemente ausgeglichen werden.

In einer alternativen Ausführungsform ist ein Hohlwellenantrieb für die Ablenkeinheit vorgesehen, und der Lichtsender ist in einer Ebene unterhalb und der Lichtempfänger in einer Ebene oberhalb der Ablenkeinheit angeordnet, wobei insbesondere die optischen Achsen von Lichtsender und Lichtempfänger in einer gemeinsamen Achse zueinander ausgerichtet sind. In dieser Anordnung benötigt zwar der Antrieb etwas mehr Bauraum, dafür kann der Sender äußerst kompakt untergebracht werden.

Die Ablenkeinheit weist besonders bevorzugt in der Verlängerung der Hohlwelle eine Öffnung auf, wobei in der Öffnung ein flaches Spiegelsegment zur 90°-Strahlablenkung des ausgesandten Lichtstrahls vorgesehen ist. Dies ist das Gegenstück zu einem flachen Spiegelsegment bei Anordnung von Lichtsender und Lichtempfänger auf der gleichen Seite der Ablenkeinheit. Auch hier ist die Umlenkung für den ausgesandten Lichtstrahl auf einfache, platzsparende und kostengünstige Weise in die Ablenkeinheit integriert.

Vorteilhafterweise ist ein Winkelmesser für die Bestimmung einer Drehstellung der Ablenkeinheit vorgesehen, wobei der Sensor entfernungsmessend ausgebildet ist, indem in der Auswertungseinheit aus einer Lichtlaufzeit des ausgesandten und wieder empfangenen Lichtstrahls die Entfernung zu den Objekten bestimmbar ist. So misst der Sensor die Objektlagen und gegebenenfalls deren Kontur in zweidimensionalen Polarkoordinaten und erfasst damit alle relevanten Positionsdaten der Objekte in dem Überwachungsbereich.

Die Auswertungseinheit ist bevorzugt dafür ausgebildet, anhand des Empfangssignals Eingriffe in ein Schutzfeld innerhalb des Überwachungsbereichs zu erkennen und daraufhin ein Absicherungssignal bereitzustellen. In dieser sicherheitstechnischen Anwendung ist der Sensor als sicherer Sensor, insbesondere als Sicherheitssensor im Sinne der eingangs genannten Normen ausgebildet. Durch die besonders kleine Baugröße lässt sich der Sensor noch leichter in die zu überwachenden Anlagen und Abläufe integrieren.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung einer ersten Ausführungsform eines erfindungsgemäßen Sensors;
- Fig. 2: eine dreidimensionale Ansicht des Empfangsspiegels und des Umlenkspiegels für den Sender gemäß Figur 1;
- Fig. 3: ein Schnitt durch die Darstellung der Figur 2;
- Fig. 4: eine Draufsicht des in Figur 2 als dreidimensionale Ansicht gezeigten Empfangsspiegels;
- Fig. 5: ein Foto des in Figur 2 als dreidimensionale Ansicht gezeigten Empfangsspiegels;
- Fig. 6: eine Darstellung des erfindungsgemäß verbesserten und vergleichmäßigten Intensitätsverlaufs in Abhängigkeit von der Reichweite; und
- Fig. 7: eine Schnittdarstellung einer zweiten Ausführungsform eines erfindungsgemäßen Sensors mit einem Hohlwellenantrieb und entgegengesetzt ausgerichtetem Lichtsender und Lichtempfänger.

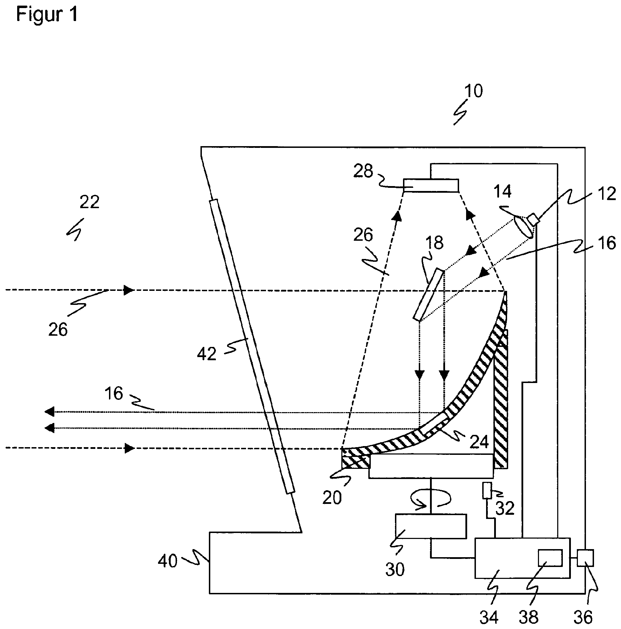

Fig. 1 zeigt eine schematische Schnittdarstellung durch einen erfindungsgemäßen Sensor 10. Die Erfindung wird anhand eines Sicherheitslaserscanners beschrieben, aber das Prinzip ist auch auf andere tastende optoelektronische Sensoren und für Einsatzfelder außerhalb der Sicherheitstechnik anwendbar.

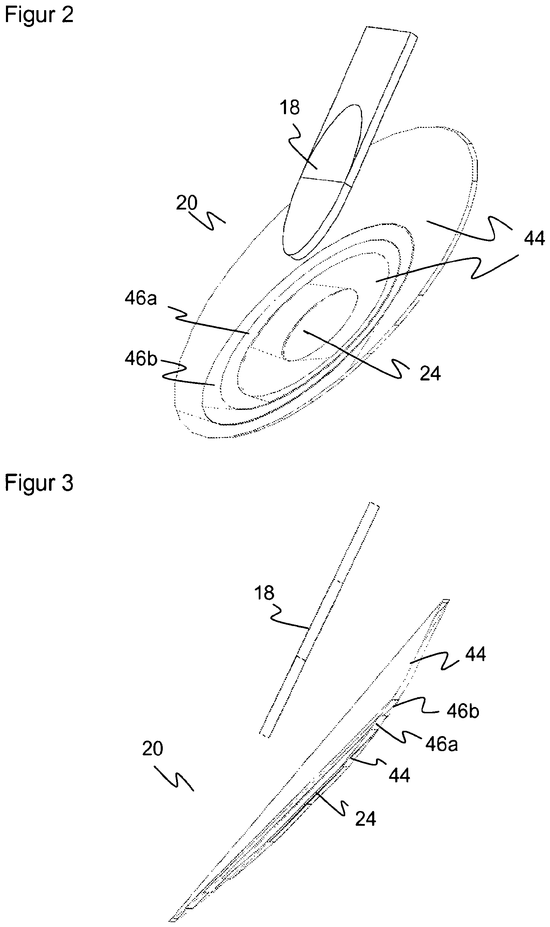

Ein Lichtsender 12, beispielsweise mit einer Laserlichtquelle, erzeugt mit Hilfe einer Sendeoptik 14 einen Sendelichtstrahl 16 mit einzelnen kurzen Lichtimpulsen. Alternativ arbeitet der Sensor 10 anstelle eines Pulsverfahrens mit dem einleitend beschriebenen Phasenverfahren. Der Sendelichtstrahl 16 wird mittels eines Umlenkspiegels 18 und einer Ablenkeinheit 20 in einen Überwachungsbereich 22 ausgesandt. Anstelle eines Umlenkspiegels 18 kann auch ein Polarisationsteiler eingesetzt werden. Die Ablenkeinheit 20 ist konkav gewölbt, also ein Hohlspiegel, beispielsweise in der Form eines außeraxialen Paraboloids. Dabei trifft der Sendelichtstrahl ein planes oder flaches Teilsegment 24 der Ablenkeinheit 20. Die genaue Ausgestaltung der Ablenkeinheit 20 wird im Folgenden anhand der Figuren 2 bis 5 noch näher erläutert.

Der Sendelichtstrahl 16 wird in dem Überwachungsbereich 22 von gegebenenfalls vorhandenen Objekten remittiert und kehrt dann, je nach optischen Eigenschaften der Objektoberfläche abgeschwächt und/oder aufgestreut, zumindest teilweise als remittierter Lichtstrahl 26 zu dem Sensor 10 zurück. Dort findet eine Strahlformung und Umlenkung in der Ablenkeinheit 20 statt, so dass der remittierte Lichtstrahl 26 gerichtet und gebündelt auf einen Lichtempfänger 28 fällt, beispielsweise eine Photodiode. Eine zusätzliche, nicht dargestellte Empfangsoptik kann vor dem Lichtempfänger 28 vorgesehen sein, um gemeinsam mit den Strahlformungseigenschaften der Ablenkeinheit 20 gewünschte optische Eigenschaften zu erzielen.

Der Lichtsender 12 steht in dieser Ausführungsform schräg, seine optische Achse schließt also mit der optischen Achse des Lichtempfängers 28 einen spitzen Winkel ein. Die Umlenkeinheit 18 ist deshalb so mit dem halben spitzen Winkel schräg ausgerichtet, das der Sendestrahl 16 parallel zu der optischen Achse des Lichtempfängers 28 auf das Teilsegment 24 umgelenkt wird. Das Teilsegment 24 sorgt seinerseits für eine senkrechte Lichtumlenkung, um eine Ebene als Überwachungsbereich 22 gleichmäßig abzutasten.

Die Ablenkeinheit 20 ist als Drehspiegel ausgestaltet, der durch Antrieb eines Motors 30 kontinuierlich rotiert. Die jeweilige Winkelstellung der Ablenkeinheit 20 wird über einen Encoder 32 erfasst. Der von dem Lichtsender 12 erzeugte Sendelichtstrahl 16 überstreicht somit den durch die Rotationsbewegung erzeugten Überwachungsbereich 22. Wird ein von dem Lichtempfänger 28 empfangener remittierter Lichtstrahl 24 aus dem Überwachungsbereich 22 empfangen, so kann aus der Winkelstellung der Ablenkeinheit 20 mittels des Encoders 32 auf die Winkellage des Objektes in dem Überwachungsbereich 22 geschlossen werden.

Zusätzlich wird die Laufzeit der einzelnen Laserlichtpulse von ihrem Aussenden bis zu dem Empfang nach Reflexion an dem Objekt in dem Überwachungsbereich 22 ermittelt. Aus der Lichtlaufzeit wird unter Verwendung der Lichtgeschwindigkeit auf die Entfernung des Objektes von dem Sensor 10 geschlossen. Diese Auswertung erfolgt in einer Auswerteeinheit 34, die dafür mit dem Lichtsender 12, dem Lichtempfänger 26, dem Motor 30 und dem Encoder 32 verbunden ist. Somit stehen über den Winkel und die Entfernung zweidimensionale Polarkoordinaten aller Objekte in dem Überwachungsbereich 22 zur Verfügung.

Speziell in sicherheitstechnischen Anwendungen ist Ziel der Auswertung, ein Sicherheitssignal an einem Sicherheitsausgang 36 (OSSD, Output Signal Switching Device) bereitzustellen, beispielsweise um einen Nothalt einer angeschlossenen Maschine auszulösen. Über die Winkel- und Entfernungsdaten berechnet die Auswerteeinheit 34 hierzu den Ort eines Objektes in dem Überwachungsbereich 22. Dies wird mit einem zweidimensionalen Schutzfeld verglichen, dessen Geometrie durch entsprechende Parameter in einem Speicher 38 der Auswertungseinheit 34 abgelegt ist. Damit erkennt die Auswertungseinheit 34, ob das Schutzfeld verletzt ist, also ob sich ein unzulässiges Objekt darin befindet und schaltet je nach Ergebnis den Sicherheitsausgang 36. Je nach Ausführungsform ist denkbar, die Auswertung oder Teile der Auswertung statt in einer internen Auswertungseinheit 34 in einer übergeordneten Steuerung vorzunehmen.

Alle genannten Funktionskomponenten sind in einem Gehäuse 40 angeordnet, das frontseitig, also im Bereich des Lichtaus- und Lichteintritts, eine Frontscheibe 42 aufweist. Die Frontscheibe 42 ist zur Vermeidung von direkten Reflexionen in den Lichtempfänger 28 schräg gestellt, so dass Sendelichtstrahl 16 und Frontscheibe 42 einen Winkel ungleich neunzig Grad einschließen.

Mit dem Sensor 10 kann eine Scanebene in einem Sichtwinkel von bis zu 270° überwacht werden. Zusätzlich zu den dargestellten Elementen kann in einem rückwärtigen Bereich, in dem der Sendelichtstrahl 16 nicht aus dem Gehäuse 40 austritt, ein Referenzziel vorgesehen sein, um die Funktion des Lichtsenders 12 zu testen. Dies ist eine beispielhafte Möglichkeit, um eine der Anforderungen der einleitend genannten Sicherheitsnormen zu erfüllen, mit denen der Sensor 10 ein sicherer Sensor wird. Prinzipiell erlaubt der dargestellte Optikaufbau auch einen größeren Sichtwinkel von bis zu 360°.

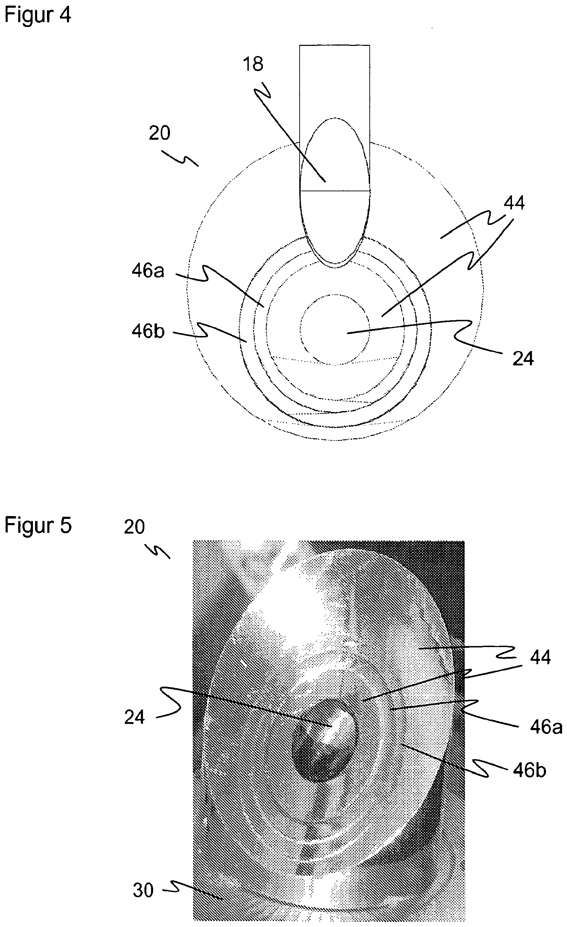

Figur 2 zeigt die Ablenkeinheit 20 und den darüber angeordneten Umlenkspiegel 18 in einer dreidimensionalen Ansicht. Figur 3 ist ein Schnitt durch diese Darstellung, Figur 4 eine Draufsicht und Figur 5 ein Foto einer Ausführungsform der Ablenkeinheit 20 als direkt mit dem Motor 30 verbundenes, einstückiges Spritzgussteil mit spiegelnder Oberfläche.

Die Ablenkeinheit 20 ist insgesamt als konkaver, rotationssymmetrischer Spiegel ausgebildet und ist in der Darstellung ein außeraxialer Paraboloid. Auf eine Wölbung genau in Form eines Paraboloids kommt es aber erfindungsgemäß nicht an, solange die Ablenkeinheit 20 die Aufgabe der Strahlformung erfüllt, indem der remittierte Lichtstrahl 26 gebündelt auf den Lichtempfänger 28 umgelenkt wird. Es sind dabei Korrekturterme höherer als zweiter Ordnung möglich. Andererseits kann die Formgebung auch aus einem Ellipsoid oder einem Hyperboloid abgeleitet sein, wobei dann bevorzugt eine Näherung bei einer gewissen Ordnung abgebrochen wird.

Die Ablenkeinheit 20 weist zum einen das zentrale, plane Teilsegment 24 für den Sendelichtstrahl 16 auf. Wie aus der Darstellung ersichtlich, schattet der Umlenkspiegel 18 einen Anteil des remittierten Lichtstrahls 26 ab, so dass dieser Anteil den Lichtempfänger 28 nicht erreicht. Diese Kernabschattung führt zu einem erheblichen Intensitätsverlust besonders im Nahbereich.

Deshalb sind erfindungsgemäß neben der gemäß der allgemeinen Formgebung der Ablenkeinheit 20 gewölbten Hauptzone 44 für den Fernbereich zusätzliche Nahzonen 46a-b vorgesehen. Dargestellt sind zwei derartige Nahzonen 46a-b, was einen guter Kompromiss zwischen ausreichenden Einstellmöglichkeiten für die Optimierung der Empfangsintensität, genügend Lichteinfall je Nahzone 46a-b und Handhabbarkeit der Gestaltung und Herstellung der Ablenkeinheit 20 bildet. Es sind aber alternativ weitere Nahzonen oder auch eine Ausführungsform mit nur einer Nahzone vorstellbar.

Die Nahzonen 46a-b sind in der Darstellung als konzentrische Ringe um das zentrale Teilsegment 24 angeordnet. Dabei bedeutet zentral, dass das Teilsegment 24 symmetrisch zu der Drehachse der Ablenkeinheit 20 liegt. Teilsegment 24 und Nahzonen 46a-b sind dagegen insgesamt auf der Ablenkeinheit 20 exzentrisch, d.h. die Hauptzone 44 nimmt nach oben zu dem Lichtempfänger hin mehr Fläche ein als zu dem Überwachungsbereich 22.

Die Nahzonen 46a-b sind in sich analog der Hauptzone 44 gekrümmt, also beispielsweise als Paraboloidsegmente ausgestaltet. Dabei weisen aber die Nahzonen 46a-b untereinander und zu der Hauptzone eine unterschiedliche Krümmung und einen unterschiedlichen außeraxialen Versatz auf. Es entsteht ein mehrzoniger Empfangsparaboloid als Ablenkeinheit 20.

Zusätzlich sind die Nahzonen 46a-b auch noch zueinander und zu der Hauptzone 44 verkippt, bevorzugt um einen kleinen Winkel von weniger als 1° oder sogar weniger als 0,5°. Diese Verkippung bewirkt, dass bei kleinerer Dejustage der Ablenkeinheit 20 zumindest einzelne der Zonen 44, 46a-b richtig ausgerichtet bleiben. Damit entsteht eine gewisse Unempfindlichkeit gegenüber Verkippungen der gesamten Ablenkeinheit 20.

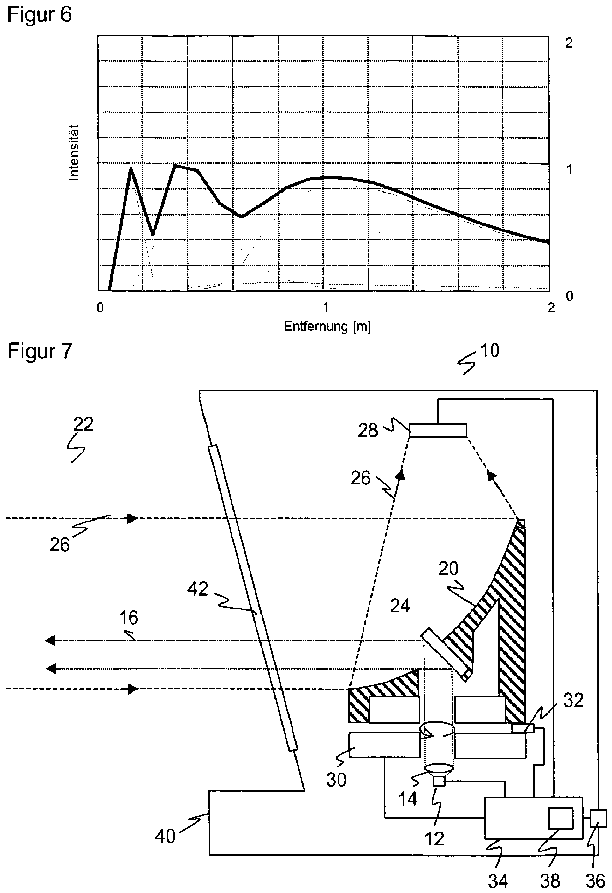

Die Form, Lage, Breite, Krümmung und Verkippung der Hauptzone 44 und der Teilzonen 46a-b sowie die Lage und Verkippung von Lichtsender 12 und Umlenkspiegel 18 wird beispielsweise durch Optiksimulationen unter Variation der genannten Parameter so optimiert, dass trotz der Kernabschattung ein möglichst gleichmäßiges Empfangssignal unabhängig von der Objektentfernung entsteht. Figur 6 zeigt einen beispielhaften Intensitätsverlauf über der Entfernung. Dabei sind zwei anfängliche Maxima erkennbar, die den Nahzonen 46a-b zuzuordnen sind, und ein wesentlich flacheres Maximum der Hauptzone 44. Deutlich erkennbar dominiert der Intensitätsanteil der Hauptzone 44 den Fernbereich. Ohne die Nahzonen 46-b würde für Entfernungen unterhalb eines halben Meters aufgrund der Kernabschattung praktisch kein Signal mehr empfangen. Die Nahzonen 46a-b umgekehrt tragen zu größeren Entfernungen um einen Meter und darüber hinaus so gut wie nicht bei. In der Überlagerung steht für alle Entfernungen ein ausreichendes Empfangssignal zur Verfügung. Durch weitere Nahzonen 46a-b könnte, soweit erforderlich, der Intensitätsverlauf noch stärker geglättet werden, indem die Zwischenminima abgemildert werden.

Figur 7 zeigt in einer schematischen Schnittdarstellung eine weitere Ausführungsform eines erfindungsgemäßen Sensors 10. Dabei bezeichnen wie schon in der bisherigen Beschreibung gleiche Bezugszeichen die gleichen oder analoge Merkmale. Anders als in der Ausführungsform gemäß Figur 1 ist der Motor 30 als Hohlwellenmotor ausgebildet. Der Lichtsender 12 befindet sich gegenüber dem Lichtempfänger 28, mit aufeinander ausgerichteter gemeinsamer optischer Achse, unterhalb des Motors 30, so dass der Sendelichtstrahl 16 durch die Hohlwelle fällt.

Die Ablenkeinheit 20 weist in der Verlängerung der Hohlwelle eine Öffnung auf, in welcher das plane Teilsegment 24 so ausgerichtet ist, dass der Sendelichtstrahl 16 im rechten Winkel in den Überwachungsbereich 22 umgelenkt wird. Auf einen Umlenkspiegel 18 kann verzichtet werden. Es entsteht dann zwar keine Kernabschattung im eigentlichen Wortsinn, aber ein ganz ähnlicher Effekt durch den Lichtanteil, der wegen des Teilsegments 24 nicht zu dem Lichtempfänger 28 gelangen kann.

Zusätzlicher Platzbedarf in radialer Richtung für die Anordnung des Lichtsenders 12 entfällt. Die Ablenkeinheit 20 hat ebenfalls mindestens eine Nahzone und kann, abgesehen von der Öffnung und der veränderten Anordnung des Teilsegments 24, Merkmale ganz analog der zuvor beschriebenen und dargestellten Ablenkeinheit 20 aufweisen.

## Patentansprüche

1. Optoelektronischer Sensor (10) mit einem Lichtsender (12) zum Aussenden eines Lichtstrahls (16) in einen Überwachungsbereich (22), einem Lichtempfänger (28) zum Erzeugen eines Empfangssignals aus dem von Objekten in dem Überwachungsbereich (22) remittierten Lichtstrahl (26), einer konkaven Ablenkeinheit (20) zur Strahlformung und Umlenkung des remittierten Lichtstrahls (26) auf den Lichtempfänger (28) sowie einer Auswertungseinheit (34), die dafür ausgebildet ist, aus dem Empfangssignal Informationen über die Objekte in dem Überwachungsbereich (22) zu gewinnen, wobei die Ablenkeinheit (20) eine optisch abbildende Hauptzone (44) mit einer ersten Brennweite und weitere Zonen (46a-b) aufweist, um den remittierten Lichtstrahl (26) zu dem Lichtempfänger (28) umzulenken,
**dadurch gekennzeichnet,**
**dass** die weiteren Zonen (46a-b) in sich gekrümmt und optisch abbildend mit einer Brennweite ungleich der ersten Brennweite ausgebildet sind, dass die weiteren Zonen (46a-b) gegenüber der Hauptzone (44) und untereinander um einen Verkippungswinkel verkippt sind, um eine Unempfindlichkeit gegenüber einer Dejustage der Ablenkeinheit (20) zu erhöhen und dass der Sensor (10) ein Laserscanner und die Ablenkeinheit (20) beweglich ist, wobei die Ablenkeinheit (20) den ausgesandten Lichtstrahl (16) in eine Überwachungsebene ablenkt und somit diese Scanebene periodisch abtastet.

2. Sensor (10) nach Anspruch 1,
wobei die Ablenkeinheit (20) mit der Hauptzone (44) und den weiteren Zonen (46a-b) einstückig ausgebildet ist, insbesondere als Spritzgussteil.

3. Sensor (10) nach Anspruch 1 oder 2,
wobei die Hauptzone (44) als optisch abbildende Fernzone mit einer ersten Brennweite und die weiteren Zonen (46a-b) als Nahzonen ausgebildet sind, wobei die Nahzonen optisch abbildend mit einer zweiten Brennweite ungleich der ersten Brennweite oder mit optisch nicht abbildenden, insbesondere Licht streuenden oder Licht umverteilenden Eigenschaften ausgebildet sind, und wobei die Ablenkeinheit (20) insbesondere eine Fernzone (44) und zwei Nahzonen (46ab) aufweist.

4. Sensor (10) nach einem der vorhergehenden Ansprüche,
wobei die weiteren Zonen (46a-b) als ringförmige Segmente in der Hauptzone (44) ausgebildet sind.

5. Sensor (10) nach einem der vorhergehenden Ansprüche,
wobei der Verkippungswinkel weniger als 1° oder weniger als 0,5° beträgt.

6. Sensor (10) nach einem der vorhergehenden Ansprüche,
wobei die Ablenkeinheit (20) ein flaches Segment (24) zur Ablenkung des ausgesandten Lichtstrahls (16) aufweist, wobei insbesondere das flache Segment (24) im Zentrum liegt.

7. Sensor (10) nach einem der vorhergehenden Ansprüche,
wobei die Hauptzone (44) im Wesentlichen die Form eines Paraboloids, eines Hyperboloids oder eines Ellipsoids aufweisen, insbesondere eines außeraxialen Paraboloids, Hyperboloids oder Ellipsoids.

8. Sensor (10) nach einem der vorhergehenden Ansprüche,
wobei der Überwachungsbereich (22) eine Scanebene ist, welche von dem Lichtstrahl (16) mittels der Ablenkeinheit (20) abtastbar ist, und wobei insbesondere die optische Achse des Lichtempfängers (28) und die Scanebene (22) senkrecht zueinander stehen.

9. Sensor (10) nach einem der vorhergehenden Ansprüche,
wobei die optische Achse des Lichtsenders (12) in einem spitzen Winkel zu der optischen Achse des Lichtempfängers (28) steht, und wobei ein Umlenkspiegel (18) oder ein Strahlteiler vorgesehen ist, welcher in dem halben spitzen Winkel orientiert ist und zwischen Lichtempfänger (28) und Ablenkeinheit (20), insbesondere oberhalb des Zentrums der Hauptzone (44) angeordnet ist.

10. Sensor (10) nach einem der Ansprüche 1 bis 8,
wobei ein Hohlwellenantrieb für die Ablenkeinheit (20) vorgesehen und der Lichtsender (12) in einer Ebene unterhalb und der Lichtempfänger (28) in einer Ebene oberhalb der Ablenkeinheit (20) angeordnet ist, und wobei insbesondere die optischen Achsen von Lichtsender (12) und Lichtempfänger (28) in einer gemeinsamen Achse zueinander ausgerichtet sind.

11. Sensor (10) nach Anspruch 10,
wobei die Ablenkeinheit (20) in der Verlängerung der Hohlwelle eine Öffnung aufweist, und wobei in der Öffnung ein flaches Spiegelsegment (24) zur 90°-Strahlablenkung des ausgesandten Lichtstrahls (16) vorgesehen ist.

12. Sensor (10) nach einem der vorhergehenden Ansprüche,
wobei ein Winkelmesser (32) für die Bestimmung einer Drehstellung der Ablenkeinheit (20) vorgesehen ist, und wobei der Sensor (10) entfernungsmessend ausgebildet ist, indem in der Auswertungseinheit (34) aus einer Lichtlaufzeit des ausgesandten und wieder empfangenen Lichtstrahls (16, 26) die Entfernung zu den Objekten bestimmbar ist.

13. Sensor (10) nach einem der vorhergehenden Ansprüche,
wobei die Auswertungseinheit (34) dafür ausgebildet ist, anhand des Empfangssignals Eingriffe in ein Schutzfeld innerhalb des Überwachungsbereichs (22) zu erkennen und daraufhin ein Absicherungssignal bereitzustellen.

14. Verfahren zur Erzeugung von Informationen über Objekte in einem Überwachungsbereich (22), wobei mit einem Lichtsender (12) ein Lichtstrahl (16) in den Überwachungsbereich (22) ausgesandt und von einem Lichtempfänger (28) ein Empfangssignal aus dem von Objekten in dem Überwachungsbereich (22) remittierten Lichtstrahl (26) erzeugt wird und wobei der remittierte Lichtstrahl (26) von einer konkaven Ablenkeinheit (20) strahlgeformt und auf den Lichtempfänger (28) umgelenkt wird, wobei der Lichtstrahl (26) nach Remission von ferneren Objekten von einer mit einer ersten Brennweite optisch abbildenden Hauptzone (44) der Ablenkeinheit (20) und nach Remission von näheren Objekten von weiteren Zonen (46a-b) der Ablenkeinheit (20) strahlgeformt und auf den Lichtempfänger (28) umgelenkt wird,
**dadurch gekennzeichnet,**
**dass** der Lichtstrahl an in sich gekrümmten und mit einer Brennweite ungleich der ersten Brennweite optisch abbildend ausgebildeten weiteren Zonen (46a-b) umgelenkt wird, die gegenüber der Hauptzone (44) und untereinander um einen Verkippungswinkel verkippt sind, um eine Unempfindlichkeit gegenüber einer Dejustage der Ablenkeinheit (20) zu erhöhen, und dass die Ablenkeinheit (20) bewegt wird, um den ausgesandten Lichtstrahl (16) periodisch in eine Überwachungsebene abzulenken und somit diese Scanebene periodisch abzutasten.

## Claims

1. An optoelectronic sensor (10) with a light transmitter (12) for transmitting a light beam (16) into a monitoring area (22), a light receiver (28) for generating a reception signal from the remitted light beam (26) remitted from objects in the monitoring area (22), a concave deflection unit (20) for beam shaping and deflecting the remitted light beam (26) onto the light receiver (28), and an evaluation unit (34) configured to obtain information about the objects in the monitoring area (22) from the reception signal, wherein the deflection unit (20) comprises an optically imaging main zone (44) having a first focal length and additional zones (46a-b) to deflect the remitted light beam (26) to the light receiver (28), **characterized in that** the additional zones (46a-b) have a curvature and are configured for an optical imaging with a focal length different from the first focal length, **in that** the additional zones (46a-b) are tilted with respect to the main zone (44) and with respect to one another by a tilt angle to increase a robustness against a misalignment of the deflection unit (20), and **in that** the sensor (10) is a laser scanner and the deflection unit (20) is movable, wherein the deflection unit (20) deflects the transmitted light beam (16) in a monitoring plane and thus periodically scans that scanning plane.

2. The sensor (10) according to claim 1,
wherein the deflection unit (20) is formed integrally with the main zone (44) and the additional zones (46a-b), in particular as an injection molded component.

3. The sensor (10) according to claim 1 or 2,
wherein the main zone (44) is configured as an optically imaging far zone with a first focal length and the additional zones (46a-b) are configured as near zones, wherein the additional zones (46a-b) are optically imaging with a second focal length different from the first focal length or are made with not optically imaging, in particular light diverging or light redistributing properties, and wherein in particular the deflection unit (20) comprises one far zone (44) and two near zones (46a-b).

4. The sensor (10) according to any of the preceding claims,
wherein the additional zones (46a-b) are made as annular segments in the main zone (44).

5. The sensor (10) according to any of the preceding claims,
wherein the tilt angle is less than 1° or less than 0.5°.

6. The sensor (10) according to any of the preceding claims,
wherein the deflection unit (20) comprises a flat segment (24) for the deflection of the transmitted light beam (16), wherein in particular the flat segment (24) is positioned in the center.

7. The sensor (10) according to any of the preceding claims,
wherein the main zone (44) has essentially the shape of a paraboloid, a hyperboloid, or an ellipsoid, in particular an off-axis paraboloid, hyperboloid, or ellipsoid.

8. The sensor (10) according to any of the preceding claims,
wherein the monitoring area (22) is a scanning plane which can be scanned by the light beam (16) by means of the deflection unit (20), and wherein in particular the optical axis of the light receiver (28) and the scanning plane (22) are perpendicular to each other.

9. The sensor (10) according to any of the preceding claims,
wherein the optical axis of the light transmitter (12) is arranged at an acute angle with the optical axis of the light receiver (28), and wherein a deflecting mirror (18) or a beam splitter is provided which is oriented at half the acute angle and arranged between light receiver (28) and deflection unit (20), in particular above the center of the main zone (44).

10. The sensor (10) according to any of claims 1 to 8,
wherein a hollow shaft drive is provided for the deflection unit (20), and wherein the light transmitter (12) is arranged in a plane above and the light receiver (28) is arranged in a plane below the deflection unit (20), and wherein in particular the optical axes of light transmitter (12) and light receiver (28) are mutually aligned in a common axis.

11. The sensor (10) according to claim 10,
wherein the deflection unit (20) comprises an opening in the extension of the hollow shaft, and wherein a flat mirror segment (24) for a 90° beam deflection of the transmitted light beam (16) is provided in the opening.

12. The sensor (10) according to any of the preceding claims,
wherein an angle encoder (32) for determining a rotational position of the deflection unit (20) is provided, and wherein the sensor (10) is configured to measure distances by determining, in the evaluation unit (34), the distance to the objects from a light time of flight of the transmitted and received light beam (16, 26).

13. The sensor (10) according to any of the preceding claims,
wherein the evaluation unit (34) is configured to detect intrusions into a protected area within the monitoring area (22) from the reception signal and to thereupon provide a protection signal.

14. A method for generating information about objects in a monitoring area (22), wherein a light beam (16) is transmitted into the monitoring area (22) by a light transmitter (12) and a reception signal is generated from the remitted light beam (26) remitted from objects in the monitoring area (22) by a light receiver (28), and wherein the remitted light beam (26) is shaped and deflected onto the light receiver (28) by a concave deflection unit (20), wherein the remitted light beam (26) is shaped and deflected onto the light receiver (28) after remission from farer objects by a main zone (44) of the deflection unit (20), the main zone (44) optically imaging with a first focal length, and after remission from nearer objects by additional zones (46a-b) of the deflection unit (20),
**characterized in that** the light beam is deflected at additional zones (46a-b) which have a curvature and are configured to be optically imaging with a focal length different from the first focal length and which are tilted with respect to the main zone (44) and with respect to one another by a tilt angle to increase the robustness against a misalignment of the deflection unit (20), and **in that** the deflection unit (20) is moved in order to periodically deflect the transmitted light beam (16) in a monitoring plane and thus to periodically scan that scanning plane.

## Revendications

1. Capteur optoélectronique (10) comprenant un émetteur de lumière (12) pour émettre un rayon lumineux (16) dans une zone de surveillance (22), un récepteur de lumière (28) pour engendrer un signal de réception à partir du rayon lumineux (26) réémis depuis des objets dans la zone de surveillance (22), une unité de déviation concave (20) pour la mise en forme du rayon et la déviation du rayon lumineux (26) réémis vers le récepteur de lumière (28), ainsi qu'une unité d'évaluation (34) qui est réalisée pour obtenir à partir du signal de réception des informations sur les objets dans la zone de surveillance (22), dans lequel l'unité de déviation (20) comporte une zone principale de manière à effectuer une imagerie optique (44) avec une première distance focale et des zones supplémentaires (46a-b), afin de dévier le rayon lumineux réémis (26) vers le récepteur de lumière (28),
**caractérisé en ce que** les zones supplémentaires (46a-b) sont réalisées courbées sur elles-mêmes et de manière à effectuer une imagerie optique avec une distance focale différente de la première distance focale, et **en ce que** les zones supplémentaires (46a-b) sont basculées par rapport à la zone principale (44) et les unes par rapport aux autres d'un angle de basculement, afin d'augmenter une insensibilité par rapport à un déréglage de l'unité de déviation (20) et **en ce que** le capteur est un scanner laser et l'unité de déviation (20) est mobile dans lequel l'unité de déviation (20) dévie le rayon lumineux (16) émis dans un plan de surveillance et balaye ainsi périodiquement ce plan de balayage.

2. Capteur (10) selon la revendication 1,
dans lequel l'unité de déviation (20) avec la zone principale (44) et les zones supplémentaires (46a-b) est réalisée d'une seule pièce, en particulier sous la forme d'une pièce coulée par injection.

3. Capteur (10) selon la revendication 1 ou 2,
dans lequel la zone principale (44) est réalisée comme une zone lointaine effectuant une imagerie optique avec une première distance focale, et les zones supplémentaires (46a-b) sont réalisées comme des zones proches, lesdites zones proches étant soit réalisées de manière à effectuer une imagerie optique avec une seconde distance focale différente de la première distance focale, soit avec des propriétés qui n'effectuent pas d'imagerie optique, en particulier de diffusion de la lumière ou de modification de la distribution de lumière, et dans lequel l'unité de déviation (20) comprend en particulier une zone lointaine (44) et deux zones proches (46a-b).

4. Capteur (10) selon l'une des revendications précédentes,
dans lequel les zones supplémentaires (46a-b) sont réalisées comme des segments de forme annulaire dans la zone principale (44).

5. Capteur (10) selon l'une des revendications précédentes,
dans lequel l'angle de basculement est inférieur à 1° ou inférieur à 0,5°.

6. Capteur (10) selon l'une des revendications précédentes,
dans lequel l'unité de déviation (20) comprend un segment plat (24) pour dévier le rayon lumineux émis (16), ledit segment plat (24) étant en particulier au centre.

7. Capteur (10) selon l'une des revendications précédentes,
dans lequel la zone principale (44) présente essentiellement la forme d'un paraboloïde, d'un hyperboloïde ou d'un ellipsoïde, en particulier d'un paraboloïde, d'un hyperboloïde ou d'un ellipsoïde désaxé.

8. Capteur (10) selon l'une des revendications précédentes,
dans lequel la zone de surveillance (22) est un plan de scannage qui peut être balayé par le rayon lumineux (26) au moyen de l'unité de déviation (20), et l'axe optique du récepteur de lumière (28) et le plan de scannage (22) sont en particulier mutuellement perpendiculaires.

9. Capteur (10) selon l'une des revendications précédentes,
dans lequel l'axe optique de l'émetteur de lumière (12) forme un angle aigu par rapport à l'axe optique du récepteur de lumière (28), et il est prévu un miroir de renvoi (18) ou un répartiteur de rayon, qui est orienté sous la moitié de l'angle aigu et est agencé entre le récepteur de lumière (28) et l'unité de déviation (20), en particulier au-dessus du centre de la zone principale (44).

10. Capteur (10) selon l'une des revendications 1 à 8,
dans lequel il est prévu un entraînement à arbre creux pour l'unité de déviation (20), l'émetteur de lumière (12) est agencé dans un plan au-dessous et le récepteur de lumière (28) est agencé dans un plan au-dessus de l'unité de déviation (20), et dans lequel les axes optiques de l'émetteur de lumière (12) et du récepteur de lumière (28) sont en particulier orientés dans un axe commun l'un par rapport à l'autre.

11. Capteur (10) selon la revendication 10,
dans lequel l'unité de déviation (20) comporte une ouverture dans le prolongement de l'arbre creux, et il est prévu dans l'ouverture un segment de miroir plat (24) pour dévier le rayon lumineux émis (16) sur 90°.

12. Capteur (10) selon l'une des revendications précédentes,
dans lequel il est prévu un dispositif de mesure angulaire (32) pour déterminer une position en rotation de l'unité de déviation (20), et dans lequel le capteur (10) est réalisé de manière à effectuer des mesures de distance du fait que dans l'unité d'évaluation (34) l'éloignement par rapport à des objets est susceptible d'être déterminé à partir d'un temps de propagation du rayon lumineux émis et à nouveau reçu (16, 26).

13. Capteur (10) selon l'une des revendications précédentes,
dans lequel l'unité d'évaluation (34) est réalisée pour, au moyen du signal de réception, reconnaître des interventions dans le champ de protection à l'intérieur de la zone de surveillance (22) et envoyer suite à cela un signal de sécurisation.

14. Procédé pour engendrer des informations concernant des objets dans une zone de surveillance (22), dans lequel on émet avec un émetteur de lumière (12) un rayon lumineux (16) vers la zone de surveillance (22), et on engendre par un récepteur de lumière (28) un signal de réception à partir du rayon lumineux (26) réémis par des objets dans la zone de surveillance (22), et dans lequel le rayon lumineux réémis (26) est mis en forme par une unité de déviation concave (26) et est dévié vers le récepteur de lumière (28), de sorte que le rayon lumineux (26), après rémission depuis des objets lointains est dévié par une zone principale (44) de l'unité de déviation (20) effectuant une imagerie optique avec une première distance focale, et après rémission depuis des objets proches est dévié par des zones supplémentaires (46a-b) de l'unité de déviation (20), vers le récepteur de lumière (28) en étant mis en forme,
**caractérisé en ce que** le rayon lumineux est dévié vers des zones supplémentaires (46a-b) courbées sur elles-mêmes et avec une distance focale différente de la première distance focale et réalisées de manière à effectuer une imagerie optique, lesdites zones étant basculées d'un angle de basculement par rapport à la zone principale (44) et les unes par rapport aux autres, afin d'augmenter une insensibilité vis-à-vis d'un déréglage de l'unité de déviation (20) et **en ce que** l'unité de déviation (20) est déplacée pour dévier périodiquement le rayon lumineux émis (16) dans un plan de surveillance et ainsi balayer périodiquement ce plan de balayage.
